# EUROPÄISCHE PATENTSCHRIFT

(11) **EP 1 106 403 B1**
(45) Veröffentlichungstag und Bekanntmachung des Hinweises auf die Patenterteilung: **12.03.2003**
(21) Anmeldenummer: 01104011.0
(22) Anmeldetag: 23.11.1995
(51) Int. Cl.: B60G 17/08, F16F 9/44, F16F 9/46, F16F 9/32

(54) **Schwingungsdämpfer mit einstellbarer Dämpfkraft**
Adjustable vibration damper
Amortisseur de vibrations réglable

(30) Priorität: 03.12.1994 DE 4443109; 14.11.1995 DE 19542293
(43) Veröffentlichungstag der Anmeldung: 13.06.2001
(62) Teilanmeldung aus: 95118407.6
(73) Patentinhaber: ZF Sachs AG, 97424 Schweinfurt (DE)
(72) Erfinder: Rottenberger, Theo, Dipl.-Ing. (FH), 97705 Burkardroth-Gefäll (DE)

(56) Entgegenhaltungen:
- EP-A- 0 601 982
- WO-A-94/12360
- DE-A- 2 242 990
- DE-A- 3 914 297
- DE-A- 4 041 829
- DE-A- 4 339 530
- DE-A- 4 417 796
- DE-U- 9 108 291
- GB-A- 1 354 385
- US-A- 4 802 561
- PATENT ABSTRACTS OF JAPAN vol. 016, no. 169 (M-1239), 23. April 1992 (1992-04-23) & JP 04 015182 A (KAYABA IND CO LTD), 20. Januar 1992 (1992-01-20)

## Beschreibung

Die Erfindung betrifft einen Schwingungsdämpfer mit einstellbarer Dämpfkraft entsprechend dem Oberbegriff von Patentanspruch 1.

Ein Schwingungsdämpfer mit einstellbarer Dämpfkraft, umfassend einen Zylinder, in dem ein Kolben mit einer Kolbenstange axial beweglich geführt ist, wobei der Kolben den Zylinder in einen ersten und einen zweiten Arbeitsraum unterteilt, mindestens ein Dämpfventil, das in einer Strömungsverbindung zwischen den beiden Arbeitsräumen angeordnet ist und über außenliegende Stellmittel in seiner Dämpfkraftkennlinie beeinflußbar ist, dadurch gekennzeichnet, daß die Einzelventile für zumindest eine Durchströmungsrichtung in einem Ventilblock angeordnet sind, der über mindestens eine Fluidenverbindung mit dem Zylinder in Verbindung steht, wobei das Behälterrohr zweigeteilt ausgeführt ist und sich jeweils ober- und unterhalb des Ventilblocks erstreckt, ist beispielsweise aus der DE-PS 39 14 297 bekannt. Bei diesem Schwingungsdämpfer wird über eine mechanische oder sonstige Einstellvorrichtung die Vorspannung eines Federscheibenpakets verändert, das die Dämpfung im Schwingungsdämpfer bewirkt. Der Einfluß auf die Dämpfkraftkennlinie beschränkt sich jedoch auf einen relativ kleinen Bereich, der für höchste Ansprüche, wie sie beispielsweise für den Rennsport gelten, nicht ausreichend ist.

Ein grundsätzliches Problem bei den verstellbaren Schwingungsdämpfer liegt darin, daß sich die Anwendung auf eine relativ kleine Gesamtzahl von relativ vielen verschiedenen Fahrzeugen beschränkt. Damit ist ein erheblicher Kostenfaktor für die Herstellung verbunden, denn es ist aus Bauraumgegebenheiten unmöglich einen Standarddämpfer für sämtliche Fahrzeuge bereitzustellen.

Die DE 43 39 530 A1 beschreibt einen Schwingungsdämpfer mit einstellbarer Dämpfkraft, umfassend einen Zylinder in dem ein Kolben mit einer Kolbenstange axial beweglich geführt ist. Der Kolben unterteilt den Zylinder in einen ersten und einen zweiten Arbeitsraum, wobei mindestens ein Dämpfventil bzw. dessen Einzelventile in einem Ventilblock in einer Strömungsverbindung zwischen den beiden Arbeitsräumen angeordnet ist. Die Einzelventile sind über außenliegende Stellmittel in seiner Dämpfkräftkennlinie beeinflußbar, wobei der Ventilblock über mindestens eine Fluidenverbindung mit dem Zylinder in Verbindung steht. Ein den Zylinder einhüllendes Behälterrohr ist zweigeteilt ausgeführt und erstreckt sich jeweils ober- und unterhalb des Ventilblocks. Der Ventilblock ist jeweils mit dem dem oberen und unteren Behälterrohrteil verschweißt

In der EP 0 601 982 A1 ist ein verstellbarer Schwingungsdämpfer offenbart, dessen Einzelventil in einem Ventilblock in Reihe zu einem einteiligen Behälterrohr angeordnet sind. Bei einer derartigen Lösung liegen sehr günstige Bauraumverhältnisse bezogen auf den radialen Bauraumbedarf für den gesamten Schwingungsdämpfer vor. Nachteilig ist jedoch der bei vorgegebenem Kolbenhub notwendige zusätzliche axiale Bauraum.

Die Fig. 3 der US 4 802 561 zeigt einen Schwingungsdämpfer mit einem einteilgen Behälterrohr, das einen Zylinder einhüllt. An dem Zylinder ist radial ein Ventilblock angeschweißt, in dem zwei verstellbare Ventile angeordnet sind. Zwischen dem Behälterrohr und dem Zylinder sowie zwischen dem Ventilblock und dem Behälterrohr liegen jeweils Schweißverbindungen vor, die eine starre Verbindung zwischen den genannten Bauteil bewirken.

Aufgabe der vorliegenden Erfindung ist es, einen Schwingungsdämpfer zu realisieren, dessen Dämpfkraftkennlinie durch außerhalb des Schwingungsdämpfers befindliche Stellmittel sehr variabel gestaltet werden kann, wobei Anpassungsmöglichkeiten am Schwingungsdämpfer hinsichtlich der Bauraumgegebenheiten berücksichtigt werden sollen.

Erfindungsgemäß wird die Aufgabe durch die Merkmale des Patentanspruch 1 gelöst.

Das geteilt Behälterrohr ermöglicht eine individuelle Verdrehung des Ventilblocks, so daß die außerhalb des Behälterrohres angeordneten Einzelventile eingestellt werden können. Bisherige Probleme, daß etwa die Felge mit dem Reifen den Bauraum für die Ventile versperrt, können durch eine einfache Verdrehung des Ventilbtocks behoben werden. Die Variantenvielzahl des Schwingungsdämpfers kann drastisch reduziert werden.

Der Ventilblock dient als Verstellelement für das zweite Einzelventil, indem sich eine Feder an einer Gehäusekappe des Ventilblocks abstützt, die axial verstell werden kann.

Nach einem vorteilhaften Unteranspruch wird die Fluidenverbindung durch ein Behälterrohr gebildet, das den Zylinder einhüllt. Des weiteren weisen die Arbeitsräume jeweils mindestens eine Anschlußöffnung an die Fluidenverbindung auf. Eine hydraulische Blockierung des Schwingungsdämpfers kann nicht eintreten. Der Kolben kann ohne Dämpfventile als reiner Verdränger ausgebildet sein.

Der Ventilblock weist eine Mittenöffnung zur Aufnahme des Zylinders auf und von dieser Mittenöffnung radial führen verlaufende Kanäle zu den Einzelventilen. Über die Mittenöffnung zentriert sich der Ventilblock am Schwingungsdämpfer.

Es besteht die Möglichkeit, daß der Kolben über mindestens eine gedrosselte Fluidenverbindung zwischen den Arbeitsräumen verfügt, so daß eine Druckbegrenzungswirkung genutzt werden kann, die bei einer Fehleinstellung vor ungewollten Dämpfkraftspitzen des Schwingungsdämpfers schützt.

Es ist vorgesehen, daß der Schwingungsdämpfer als ein Einrohrdämpfer aufgebaut ist, in dessen Zylinder mittels eines Trennkolbens ein gasgefüllter Ausgleichsraum ausgeführt ist, wobei ein Anschlag eine Hubbegrenzung für den Trennkolben bildet. Der Anschlag verhindert, daß die Anschlußöffnung des dem Ausgleichsraum benachbarten Arbeitsraums vom Trennkolben überfahren wird und der Trennkolben seine Wirkung verliert.

Zur Gewichtseinsparung ist vorgesehen, daß das Behälterrohr aus Aluminium gefertigt ist. Die unterschiedliche Materialauswahl zwischen dem Zylinder aus Stahl und dem Behälterrohr aus Aluminium soll die Vorspannung beim Dämpferbetrieb vergrößern.

Nach einem weiteren vorteilhaften Unteranspruch weist der Zylinder eine Durchmessererweiterung im Bereich der Mittenöffnung des Ventilblocks auf. Innerhalb der Mittenöffnung ist eine Ringdichtung in den Ventilblock eingelegt. Die Durchmessererweiterung des Zylinders soll ausschließen, daß die Ringdichtung bei der Montage über die Anschlußöffnungen im oberen Arbeitsraum geschoben werden muß.

Eine vorteilhafte Ausgestaltungsform einer Durchmessererweiterung wird von einer auf den Zylinder aufgeschobenen Hülse gebildet. Gerade bei kleinen Stückzahlen können aufwendige Umformwerkzeuge und Verfahrensschritte umgangen werden.

In weiterer Ausgestaltung weist der Zylinder einen umlaufenden Befestigungsrand auf, der mit dem unteren Behälterrohrteil eine Befestigungsverbindung eingeht. Der Befestigungsrand versteift den Schwingungsdämpfer und bietet verschiedene Möglichkeiten der Befestigung, beispielsweise für ein Gewinde oder eine Versickung.

In den Befestigungsrand können auch Anschlußöffnungen vorhanden sein, die den unteren Arbeitsraum mit dem Ventilblock verbinden. Verlaufen diese parallel zum Zylinder, so verringern die Anschlußöffnungen nicht den Hubweg des Kolbens. Es bietet sich ferner an, daß der Befestigungsrand und die Hülse einteilig ausgeführt sind. Man erleichtert sich wesentlich die Befestigung des Bereichs der Außendurchmessererweiterung.

Bei einer Ausführungsform ist der Trennkolben innerhalb des Behälterrohres gleitend angeordnet. Als Anschlag dienen der offene Zylinder oder der Befestigungsrand. Der vom Durchmesser des Zylinders unabhängige Trennkolben läßt einen größeren Durchmesser und daraus resultierend eine höhere Dämpfkraft zu, da die druckbeaufschlagte Fläche im gasgefüllten Ausgleichsraums größer ist.

Anhand der folgenden Figurenbeschreibung soll die Erfindung näher erläutert werden. Es zeigt:
- Fig. 1: Schwingungsdämpfer mit zwei außenliegenden Ventilen
- Fig. 2: Weiteres Ausführungsbeispiel eines Schwingungsdämpfer nach Fig. 1

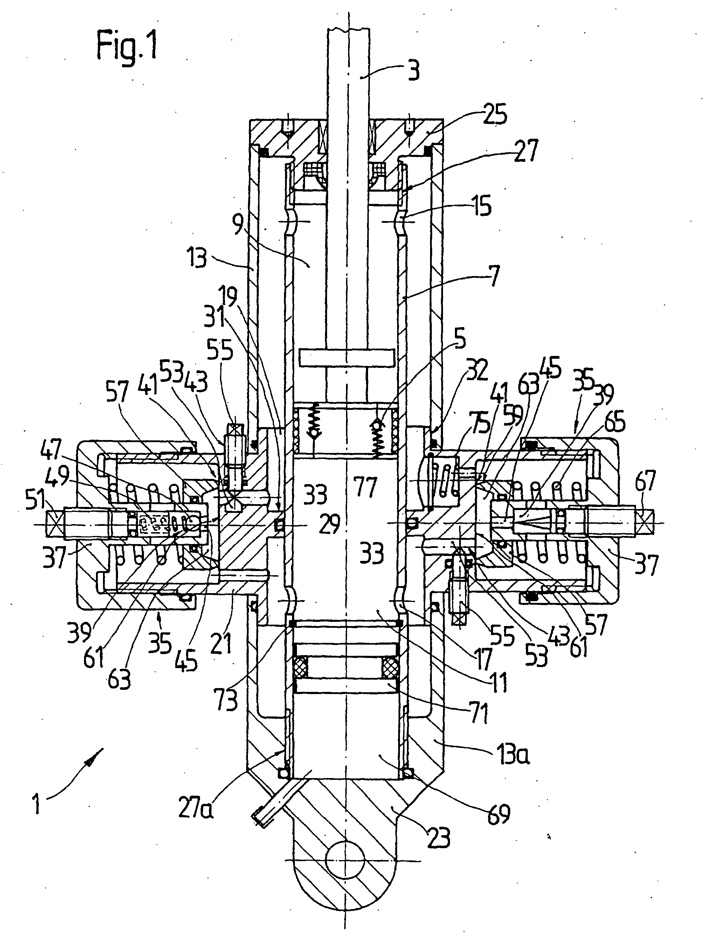

Die Figur 1 zeigt einen Schwingungsdämpfer 1, bei dem eine Kolbenstange 3 mit einem Kolben 5 innerhalb eines Zylinders 7 axial beweglich geführt ist. Der Kolben trennt den Zylinder in einen oberen und einen unteren Arbeitsraum 9;11. Ein Behälterrohr 13; 13a hüllt den Zylinder 7 ein, wodurch ein Ringraum entsteht, der über Anschlußöffnungen 15;17 eine Fluidenverbindung 19 zu einem Ventilblock 21 schafft. Das Behälterrohr ist zweiteilig ausgeführt und erstreckt sich oberhalb und unterhalb des Ventilblocks. Ein Boden 23 als Bestandteil des unteren Behälterrohrteils verschließt den Zylinder. An der Kolbenstangenaustrittsseite ist ein Deckel 25 über eine Gewindeverbindung 27 wiederverschließbar mit dem Zylinder 7 verbunden. Der Ventilblock 21 zentriert sich über eine Mittenöffnung 29 am Zylinder, wobei die Mittenöffnung von einem umlaufenden abgedichteten Steg 31 gebildet wird. Oberhalb und unterhalb in den jeweiligen Endlagen des Kolbens 5 sind die Anschluβöffnungen 15; 17 angeordnet, so daß Dämpfventile innerhalb des Ventilblocks über radial verlaufende Kanäle 33 und die Fluidenverbindung 19 mit den Arbeitsräumen 9;11 verbunden sind. Eine weitere Gewindeverbindung 27a zwischen dem Zylinder 7 und dem unteren Behälterrohrteil 13a sorgt für eine Verspannungsreihe zwischen dem Deckel 25, dem oberen Behälterrohrteil 13, dem Ventilblock 21 und dem unteren Behälterrohrteil 13a. Vor dem abschließenden Verschrauben der Gewindeverbindungen kann der Ventilblock in jede beliebige Lage verdreht werden, um u. U. bestehende Bauraumbeschränkungen zu umgehen. Neben der Mittenöffnung 29 steht zur Zentrierung eine Umfangsfläche 32 am Außendurchmesser des Ventilblocks zum Innendurchmesser der Behälterrohrteile zur Verfügung.

Der Ventilblock verfügt über zwei sich radial erstreckende Ventilgehäuse 35, die endseitig durch Gehäusekappen 37 verschlossen werden. Innerhalb der Ventilgehäuse sind ein erstes Ventil 39, ein zweites Ventil 41 und ein weiteres Ventil 43 installiert. Das erste Ventil 39 verfügt nur über einen kleinen Drosselquerschnitt und bildet den Voröffnungsquerschnitt für das gesamte Dämpfventil. In dem linken Ventilgehäuse 35 besteht das erste Ventil 39 aus einer Drossel 45, die von einer Kugel 47 mit einer Schließfeder 49 abgedeckt wird. Über eine Einstellschraube 51 kann die Vorspannung der Schließfeder individuell eingestellt werden. Das erste Ventil 39 liegt in Reihe mit dem weiteren Ventil 43, das ebenfalls aus einer Drossel 53 mit einem im Vergleich zur ersten Drossel 45 deutlich größeren Querschnitt ausgestattet ist. Die Drossel 53 ist Bestandteil des radial verlaufenden Kanals 33. Zur Verstellung des weiteren Ventils kommt ebenfalls eine Stellschraube 55 zur Anwendung, die durch eine Axialbewegung den Drosselquerschnitt stufenlos bestimmt.

Das zweite Ventil 41 wird von einer Ventilscheibe 57 gebildet, deren Ventilschulter 59 auf einer Ventilsitzfläche 61 des Ventilblocks 21 zur Anlage kommt. Die Ventilscheibe 57 bildet mit der Ventilsitzfläche 61 einen Anströmraum 63, in den der Dämpfmediumstrom des weiteren Ventils 43 mündet und von dem der Dämpfmediumstrom des ersten Ventil 39 abführt. Die Ventilscheibe unterliegt der Kraftbeaufschlagung durch eine Feder 65, die sich an der Gehäusekappe 37 abstützt. Die Gehäusekappe ist über ein Gewinde axial verstellbar, so daß dadurch die Kraftbeaufschlagung verändert werden kann.

Der Aufbau des zweiten und des weiteren Ventils im rechten Ventilgehäuse 35 entspricht dem bisher beschriebenen. Abweichend weist das erste Ventil 39 anstelle der federbelasteten Kugel eine Stellnadel 67 mit einer konischen Spitze auf, die über ein Gewinde innerhalb der Gehäusekappe 37 verstellbar ist, so daß sich der Querschnitt der Drossel 45 definieren läßt.

Der Schwingungsdämpfer ist nach dem Einrohr-Prinzip aufgebaut, wobei ein gasgefüllter Ausgleichsraum 69 die Volumendifferenzen des verdrängten Dämpfmediums kompensiert. Ein Trennkolben 71 trennt den Ausgleichsraum 69 vom unteren Arbeitsraum 11. Damit die untere Anschlußöffnung 17 in die Fluidenverbindung 19 nicht blockiert oder mit dem Ausgleichsraum verbunden werden kann, ist ein Anschlag 73 vorgesehen, der die Axialbewegung des Trennkolbens begrenzt.

Beim Dämpferbetrieb fährt die Kolbenstange 3 in den Zylinder 7 ein. Das verdrängte Dämpfmediumvolumen entweicht aus dem unteren Arbeitsraum 11 durch die Anschlußöffnung 17 in die Fluidenverbindung 19 über den radial verlaufende Kanal 33 in das rechte Ventilgehäuse 35. Es schließt sich das weitere Ventil 43 an, so daß das Dämpfmedium in den Anströmraum 63 gelangt. In Abhängigkeit der Einfahrgeschwindigkeit der Kolbenstange entweicht das Dämpfmedium nur über die von der Stellnadel 67 bestimmten Voröffnungsquerschnitt oder zusätzlich zwischen der Ventilsitzfläche 61 und der Ventilschulter 59, wenn die Ventilscheibe 57 abgehoben ist. Das Dämpfmedium ergießt sich in das Ventilgehäuse 35 und fließt über ein geöffnetes Rückschlagventil 75 in die Fluidenverbindung 19 ab. Das Rückschlagventil 75 sorgt für eine richtungsabhängige Durchströmung des rechten Ventilgehäuses. Bei einer Ventilanordnung mit einem ersten Ventil 39 in der Bauart wie im linken Ventilgehäuse entfällt das Rückschlagventil 75, da die federbelastete Kugel 47 ein Rückschlagventil darstellt. Die Wirkungsweise der Dämpfventilanordnung im linken Ventilgehäuse, die eine Dämpfkraft in Zugrichtung erzeugt, ist identisch mit der vorherigen Beschreibung für die Druckrichtung. Die Anwendung der beiden Anordnungstypen ist alternativ oder in Kombination zu sehen. Bei einer Kolbenstangenausfahrbewegung ist das Rückschlagventil 75 im rechten Ventil geschlossen, so daß kein Dämpfmedium über die Anschlußöffnung 15 und die Fluidenverbindung 19 in das rechte Ventil einströmen kann. In Abhängigkeit der ermittelten Fahreindrücke und/oder Dämpfkräfte wird über die Stelleinrichtungen eine Anpassung der Dämpfkraftkennlinie vorgenommen. Dabei bestimmt das erste Ventil den Kennlinieneinlauf, das zweite Ventil den mittleren Geschwindigkeitsbereich der Kennlinie, während das weitere Ventil für die Spitzengeschwindigkeiten der Kolbenstange benutzt wird, um einen progressiven Dämpfkraftkennlinienauslauf zu realisieren. In der Bauart der weiteren Ventile können auch mehrere Ventile benutzt werden.

Damit eine Fehleinstellung der Stellmittel in Richtung "Hart" der Dämpfkraftkennlinie nicht zu Schäden führt, können zusätzliche Kolbenventile 77 mit der Funktion eines Druckbegrenzungsventils zur Anwendung kommen. In der Beschreibung wurden die Stellmittel stets als einfache mechanische Bauteile beschrieben. Alternativ können natürlich auch magnetkraftbetriebene, hydraulische, elektronische oder sonstige Stellmittelantriebe verwendet werden.

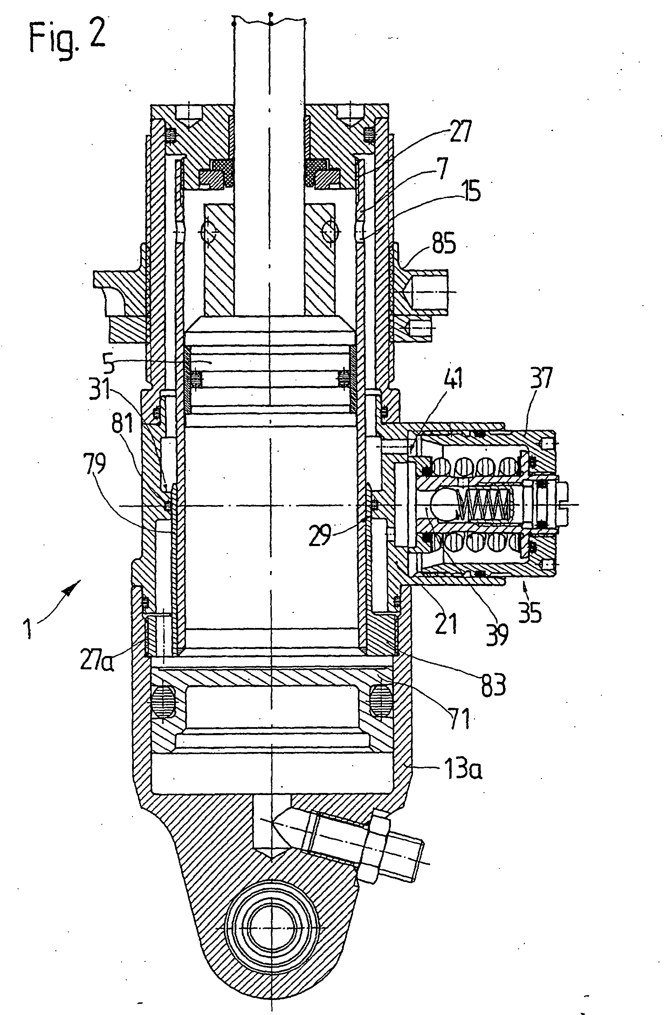

Der Schwingungsdämpfer der Fig. 2 entspricht im wesentlichen Prinzip der Fig. 1. Abweichend verfügt dieser Schwingungsdämpfer 1 über zwei von außen verstellbare Ventile 39; 41, wobei die Endkappe 37 innerhalb des Ventilgehäuses 35 verschiebbar ist. Zur Vergrößerung der druckbeaufschlagten Fläche des Trennkolbens 71 ist dieser innerhalb des Behälterrohres 13a gleitend angeordnet.

Ein weiterer Unterschied ist in der Ausgestaltung des Zylinder 7 zu erkennen. Im Bereich der Mittenöffnung 29 des Ventilblocks 21 verfügt der Zylinder über eine Erweiterung des Außendurchmessers mittels einer Hülse 79. Damit bleibt der Innendurchmesser des Zylinders 7 als Gleitbahn für den Kolben 5 erhalten. Die Außendurchmessererweiterung erlaubt eine Vergrößerung der Mittenöffnung sowie der in dem Steg 31 eingelegten Ringdichtung 81. Folglich wird die Ringdichtung 81 bei der Montage des Schwingungsdämpfers nicht über die Anschlußöffnungen 15 geschoben, so daß eine Beschädigung ausgeschlossen ist.

Die Gewindeverbindung 27a zwischen dem Zylinder 7 und dem unteren Behälterrohrteil 13a erfolgt über einen umlaufenden Befestigungsrand 83, der am Zylinder 7 angeschweißt ist. Der Befestigungsrand dient dem Trennkolben als Anschlag und ist dabei einteilig mit der Hülse 79 ausgeführt. Selbstverständlich können anstelle der Gewindeverbindungen 27; 27a auch andere Verbindungsarten vorgesehen sein.

Im Grunde wirken auf den Ventilblock 21 keine Kräfte in Umfangsrichtung. Aus Gründen des Leichtbaus verwendet man für die Behälterrohrteile bevorzugt Aluminium, wobei die größere Wärmedehnung von Aluminium im Vergleich zum Stahlzylinder den Effekt hat, daß die Teilevorspannung auf den Ventilblock währen des Dämpferbetriebs noch zunimmt. Damit steigen auch die in Umfangsrichtung aufnehmbaren Kräfte.

Ergänzend zum Schwingungsdämpfer der Figur 1 verfügt der Schwingungsdämpfer der Fig. 2 über einen in seiner Höhe verstellbaren Federteller 85, der mittels einer Sicherungsmutter fixiert wird.

## Patentansprüche

1. Schwingungsdämpfer (1) mit einstellbarer Dämpfkraft, umfassend einen Zylinder (7), in dem ein Kolben (5) mit einer Kolbenstange (3) axial beweglich geführt ist, wobei der Kolben den Zylinder in einen ersten und einen zweiten Arbeitsraum (9; 11) unterteilt, mindestens ein Dämpfventil (39; 41; 43), dessen Einzelventile (39; 41; 43) in einem Ventilblock (21) in einer Strömungsverbindung zwischen den beiden Arbeitsräumen angeordnet ist und über außenliegende Stellmittel (51; 55; 37) in seiner Dämpfkraftkennlinie beeinflußbar sind, wobei der Ventilblock (21) über mindestens eine Fluidenverbindung (19) mit dem Zylinder (7) in Verbindung steht und ein den Zylinder (7) einhüllendes Behälterrohr (13, 13a) zweigeteilt ausgeführt ist, das sich jeweils ober- und unterhalb des Ventilblocks (21) erstreckt,
**dadurch gekennzeichnet,**
**dass** ein Deckel (25) mit dem Zylinder (7) an der Kolbenstangenaustrittsseite verbunden ist und eine Gewindeverbindung (27) am Deckel (25) und/oder eine Gewindeverbindung (27a) zwischen dem Zylinder (7) und dem unteren Behälterrohrteil (13a) für eine Verspannungsreihe zwischen dem Deckel (25), dem oberen Behälterrohrteil (13), dem Ventilblock (21) und dem unteren Behälterrohrteil (13a) sorgt, so dass vor dem abschließenden Verschrauben der Gewindeverbindung(en) der Ventilblock (21) in jede Lage verdreht werden kann.

2. Schwingungsdämpfer nach Anspruch 1, **dadurch gekennzeichnet, daß** sich eine Feder (65) zur Verstellung des zweiten Einzelventils (41) an einer Gehäusekappe (37) des Ventilblocks abstützt, die axial verstellt werden kann.

3. Schwingungsdämpfer nach Anspruch 1, daß die Fluidenverbindung (19) durch das Behälterrohr (13, 13a) gebildet wird, das den Zylinder (7) einhüllt.

4. Schwingungsdämpfer nach Anspruch 3, **dadurch gekennzeichnet, daß** die Arbeitsräume (9; 11) jeweils mindestens eine Anschlußöffnung (15; 17) an die Fluidenverbindung (19) aufweisen.

5. Schwingungsdämpfer nach Anspruch 1, **dadurch gekennzeichnet, daß** der Ventilblock (21) eine Mittenöffnung (29) zur Aufnahme des Zylinders (7) aufweist und von dieser Mittenöffnung radial verlaufende Kanäle (33) zu den Einzelventilen führen.

6. Schwingungsdämpfer nach einem der Ansprüche 1 bis 5, **dadurch gekennzeichnet, daß** der Kolben (5) über mindestens eine gedrosselte Fluidenverbindung (77) zwischen den Arbeitsräumen (9,11) verfügt.

7. Schwingungsdämpfer nach einem beliebigen der Ansprüche 1 bis 5, **dadurch gekennzeichnet, daß** der Schwingungsdämpfer (1) als ein Einrohrdämpfer aufgebaut ist, in dessen Zylinder (7) mittels eines Trennkolbens (71) ein gasgefüllter Ausgleichsraum (69) ausgeführt ist, wobei ein Anschlag (73) eine Hubbegrenzung für den Trennkolben bildet.

8. Schwingungsdämpfer nach Anspruch 1, **dadurch gekennzeichnet, daß** das Behälterrohr (13; 13a) aus Aluminium gefertigt ist.

9. Schwingungsdämpfer nach Anspruch 5, **dadurch gekennzeichnet, daß** der Zylinder (7) eine Durchmessererweiterung im Bereich der Mittenöffnung (29) des Ventilblocks (21) aufweist.

10. Schwingungsdämpfer nach Anspruch 5, **dadurch gekennzeichnet, daß** die Durchmessererweiterung von einer auf den Zylinder (7) aufgeschobenen Hülse (79) gebildet wird.

11. Schwingungsdämpfer nach Anspruch 1, **dadurch gekennzeichnet, daß** der Zylinder (7) einen umlaufenden Befestigungsrand (83) aufweist, der mit dem unteren Behälterrohrteil (13a) eine Befestigungsverbindung (27a) eingeht.

12. Schwingungsdämpfer nach Anspruch 11, **dadurch gekennzeichnet, daß** der Befestigungsrand die Anschlußöffnung(en) (17) aufweist.

13. Schwingungsdämpfer nach den Ansprüchen 10 und 11, **dadurch gekennzeichnet, daß** der Befestigungsrand (83) und die Hülse (79) einteilig ausgeführt sind

14. Schwingungsdämpfer nach Anspruch 7, **dadurch gekennzeichnet, daß** der Trennkolben (71) innerhalb des Behälterrohres (13) gleitend angeordnet ist.

## Claims

1. Vibration damper (1) with adjustable damping force, comprising a cylinder (7), in which a piston (5) with a piston rod (3) is guided axially movably, the piston subdividing the cylinder into a first and a second working space (9; 11), and at least one damping valve (39; 41; 43), the individual valves (39; 41; 43) of which are arranged in a valve block (21) in a flow connection between the two working spaces and are capable of being influenced in terms of damping-force characteristic via outer actuating means (51; 55; 37), the valve block (21) being connected to the cylinder (7) via at least one fluid connection (19), and a container tube (13, 13a) which encases the cylinder (7) being designed so as to be divided in two and extending in each case above and below the valve block (21), **characterized in that** a cover (25) is connected to the cylinder (7) on the piston-rod exit side, and a threaded connection (27) on the cover (25) and/or a threaded connection (27a) between the cylinder (7) and the lower container-tube part (13a) ensures a bracing series between the cover (25), the upper container-tube part (13), the valve block (21) and the lower container-tube part (13a), so that the valve block (21) can be rotated into any position before the final screwing of the threaded connection or threaded connections.

2. Vibration damper according to Claim 1, **characterized in that** a spring (65) for adjusting the second individual valve (41) is supported on a housing cap (37) of the valve block, the said housing cap being capable of being adjusted axially.

3. Vibration damper according to Claim 1, **characterized in that** the fluid connection (19) is formed by the container tube (13, 13a) which encases the cylinder (7).

4. Vibration damper according to Claim 3, **characterized in that** the working spaces (9; 11) have in each case at least one connecting orifice (15; 17) to the fluid connection (19).

5. Vibration damper according to Claim 1, **characterized in that** the valve block (21) has a central orifice (29) for receiving the cylinder (7) and ducts (33) running radially from this central orifice lead to the individual valves.

6. Vibration damper according to one of Claims 1 to 5, **characterized in that** the piston (5) has at least one throttled fluid connection (77) between the working spaces (9, 11).

7. Vibration damper according to any one of Claims 1 to 5, **characterized in that** the vibration damper (1) is constructed as a single-tube damper, in the cylinder (7) of which a gas-filled compensating space (69) is formed by means of a separating piston (71), a stop (73) forming a stroke limitation for the separating piston.

8. Vibration damper according to Claim 1, **characterized in that** the container tube (13; 13a) is manufactured from aluminium.

9. Vibration damper according to Claim 5, **characterized in that** the cylinder (7) has a diametral widening in the region of the central orifice (29) of the valve block (21).

10. Vibration damper according to Claim 5, **characterized in that** the diametral widening is formed by a sleeve (79) pushed onto the cylinder (7).

11. Vibration damper according to Claim 1, **characterized in that** the cylinder (7) has a peripheral fastening rim (83) which makes a fastening connection (27a) with the lower container-tube part (13a).

12. Vibration damper according to Claim 11, **characterized in that** the fastening rim has the connecting orifice or connecting orifices (17).

13. Vibration damper according to Claims 10 and 11, **characterized in that** the fastening rim (83) and the sleeve (79) are produced in one piece.

14. Vibration damper according to Claim 7, **characterized in that** the separating piston (71) is arranged slidably within the container tube (13).

## Revendications

1. Amortisseur de vibrations (1) réglable, comprenant un cylindre (7) dans lequel un piston (5) avec une tige de piston (3) est mobile axialement, dans lequel le piston divise le cylindre en une première et une seconde chambres de travail (9; 11), au moins une soupape d'amortissement (39; 41; 43) dont les soupapes individuelles (39; 41; 43) sont disposées dans un bloc de soupapes (21) en une communication d'écoulement entre les deux chambres de travail et dont la caractéristique d'amortissement peut être influencée par des moyens de réglage extérieurs (51; 55; 37), dans lequel le bloc de soupapes (21) est en communication avec le cylindre (7) par au moins une communication fluidique (19) et un boîtier tubulaire (13, 13a) enveloppant le cylindre (7) est réalisé en deux parties, et s'étend respectivement au-dessus et en dessous du bloc de soupapes (21), **caractérisé en ce qu'**un couvercle (25) est assemblé au cylindre (7) du côté de la sortie de la tige de piston et un assemblage fileté (27) sur le couvercle (25) et/ou un assemblage fileté (27a) entre le cylindre (7) et la partie inférieure (13a) du boîtier tubulaire assure une ligne de serrage entre le couvercle (25), la partie supérieure (13) du boîtier tubulaire, le bloc de soupapes (21) et la partie inférieure (13a) du boîtier tubulaire, de telle manière qu'avant le vissage de l'assemblage/des assemblages fileté(s), le bloc de soupapes (21) puisse être tourné dans chaque position.

2. Amortisseur de vibrations suivant la revendication 1, **caractérisé en ce qu'**un ressort (65) destiné au réglage de la deuxième soupape individuelle (41) prend appui sur un capuchon de boîtier (37) du bloc de soupapes, qui peut être déplacé en direction axiale.

3. Amortisseur de vibrations suivant la revendication 1, **caractérisé en ce que** la communication fluidique (19) est formée à travers le boîtier tubulaire (13, 13a), qui enveloppe le cylindre (7).

4. Amortisseur de vibrations suivant la revendication 3, **caractérisé en ce que** les chambres de travail (9; 11) présentent chacune au moins une ouverture de raccordement (15; 17) à la communication fluidique (19).

5. Amortisseur de vibrations suivant la revendication 1, **caractérisé en ce que** le bloc de soupapes (21) présente une ouverture centrale (29) destinée à recevoir le cylindre (7) et des canaux orientés radialement (33) conduisent de cette ouverture centrale aux soupapes individuelles.

6. Amortisseur de vibrations suivant l'une quelconque des revendications 1 à 5, **caractérisé en ce que** le piston (5) dispose d'au moins une communication fluidique étranglée (77) entre les chambres de travail (9, 11).

7. Amortisseur de vibrations suivant l'une quelconque des revendications 1 à 5, **caractérisé en ce que** l'amortisseur de vibrations (1) est construit comme un amortisseur à tube unique, dans le cylindre (7) duquel une chambre d'équilibrage (69) remplie de gaz est réalisée au moyen d'un piston de séparation (71), dans lequel une butée (73) forme une limitation de course pour le piston de séparation.

8. Amortisseur de vibrations suivant la revendication 1, **caractérisé en ce que** le boîtier tubulaire (13; 13a) est fabriqué en aluminium.

9. Amortisseur de vibrations suivant la revendication 5, **caractérisé en ce que** le cylindre (7) présente une augmentation de diamètre dans la région de l'ouvertur centrale (29) du bloc de soupapes (21).

10. Amortisseur de vibrations suivant la revendication 5, **caractérisé en ce que** l'augmentation de diamètre est formée par un manchon (79) enfilé sur le cylindre (7).

11. Amortisseur de vibrations suivant la revendication 1, **caractérisé en ce que** le cylindre (7) présente un bord de fixation périphérique (83), qui constitue un assemblage de fixation (27a) avec la partie inférieure (13a) du boîtier tubulaire.

12. Amortisseur de vibrations suivant la revendication 11, **caractérisé en ce que** le bord de fixation présente l'ouverture/les ouvertures de raccordement (17).

13. Amortisseur de vibrations suivant les revendications 10 et 11, **caractérisé en ce que** le bord de fixation (83) et le manchon (79) sont réalisés en une seule pièce.

14. Amortisseur de vibrations suivant la revendication 7, **caractérisé en ce que** le piston de séparation (71) est coulissant à l'intérieur du boîtier tubulaire (13).
